# EUROPÄISCHE PATENTSCHRIFT

(11) **EP 2 845 529 B1**
(45) Veröffentlichungstag und Bekanntmachung des Hinweises auf die Patenterteilung: **06.02.2019**
(21) Anmeldenummer: 14180780.0
(22) Anmeldetag: 13.08.2014
(51) Int. Cl.: A47J 43/07

(54) **Komponente eines Küchengerätes**
Component for a kitchen appliance
Composante d'un appareil de cuisine

(30) Priorität: 04.09.2013 DE 102013217690
(43) Veröffentlichungstag der Anmeldung: 11.03.2015
(73) Patentinhaber: BSH Hausgeräte GmbH, 81739 München (DE)
(72) Erfinder: Brecko, Ales, 3000 Celje (SI); Strojansek, Aleksander, 3331 Nazarje (SI); Koscak, Ales, 6230 Postojna (SI)

(56) Entgegenhaltungen:
- EP-A1- 2 545 819
- CN-U- 201 578 105
- DE-B- 1 224 006
- US-A- 3 109 471

## Beschreibung

### Hintergrund der Erfindung

Die Erfindung betrifft eine Komponente eines Küchengeräts mit einer Kupplung zur Befestigung eines Werkzeugs sowie einem topfförmigen Siebteil mit einem mit Durchtrittsöffnungen versehenen Topfboden und einem den Topfboden kragenförmig umschließenden Topfmantel, wobei das Siebteil auf einer Innenseite Schneidkanten aufweist, die im Wesentlichen radial zu einer Achse der Kupplung ausgerichtet sind.

### Stand der Technik

Komponenten von Küchengeräten mit topfförmigen Siebteilen sind aus dem Stand der Technik bekannt. Die Patentanmeldung WO 2008/031803 A1 offenbart ein Passiergerät, insbesondere für die Verwendung mit einer Küchenmaschine, umfassend ein topfförmig ausgebildetes Siebteil und ein Passierwerkzeug mit einem an eine Antriebswelle ankuppelbaren Nabenteil, um das Passierwerkzeug um eine in Längsrichtung eines Topfmantels des Siebteils verlaufende Drehachse rotierend anzutreiben, und wenigstens einem sich von dem Nabenteil radial nach außen erstreckenden Passierflügel. Der Topfmantel weist entlang seines Umfangs auf seiner Innenseite mindestens einen nischenartigen Abschnitt auf, der einen größeren Abstand von der Drehachse hat als ein anderer Abschnitt der Innenseite des Topfmantels. Die voreilende Kante des Passierflügels ist bei der vorgesehenen Drehrichtung wenigstens auf einem Teilabschnitt mit einer ersten Schneidkante ausgestattet, um Passiergut zu zerkleinern.

Die Patentanmeldung GB 2456538 A offenbart einen Pürieraufsatz für einen Handmixer, der ein elongiertes Gehäuse umfasst, das an einem Ende dazu geeignet ist, einen motorgetriebenen Schaft aufzunehmen und das am anderen Ende ein Pürierwerkzeug aufweist, das einen Rotor umfasst, der innerhalb eines offenen zylindrischen Hohlraums angebracht ist, dabei ist der Hohlraum durch einen geschlitzten Mantel begrenzt.

Die Patentanmeldung WO 2012/071608 A1 beschreibt ein Püriergerät zum Pürieren von Kartoffeln und ähnlichen Lebensmitteln, wobei das Gerät eine Antriebseinheit einschließt. Das Gerät umfasst zusätzlich eine Pürieranordnung, die von der besagten Antriebseinheit ausgeht. Die besagte Pürieranordnung umfasst ein Mantelelement und ein Pürierelement, das innerhalb des besagten Mantelelements operiert. Dabei werden pürierte Kartoffeln und ähnliche Nahrungsmittel durch Öffnungen in einer Seitenwand des besagten Mantelelements gepresst.

Das Patent GB 624107 beansprucht ein Gerät zur Emulsifikation oder ähnlicher Behandlung von Materialien, das eine rotierbare Achse in einem Schaft umfasst. Das Gerät umfasst ferner eine zylindrische Kammer, die an ihrem oberen Ende geschlossen ist und durch den besagten Schaft gestützt ist. Die Mantelfläche der zylindrischen Kammer weist Schneidekanten sowie Schlitze auf. In der zylindrischen Kammer ist eine Scheibe angeordnet, die an der rotierbaren Achse befestigt ist und die die Materialien zu den Schneidekanten bzw. Schlitzen der Mantelfläche der zylindrischen Kammer führt.

Die Europäische Patentanmeldung EP 0943278 A1 beschreibt ein Küchengerät zum schneidenden Zerkleinern von Nahrungsmitteln, wie Obst, Gemüse oder dergleichen, mit einem in einer Halterung angebrachten Schneidmesser, das zwei Schneiden aufweist, deren Schneidkanten im Wesentlichen in einer gemeinsamen Schneidebene verlaufen und unter einem Winkel zueinander angeordnet sind. Um ein solches Schneidmesser derart auszubilden, dass insbesondere die zu schneidenden Nahrungsmittelstücke glatt durchtrennt werden, sodass im Wesentlichen keine abgerissene Stelle auftritt, wird das Schneidmesser in einer um eine senkrecht zu der Schneidebene um eine Drehachse rotierenden Scheibe ausgebildet, wobei deren eine Schneide im Wesentlichen näher zu der Drehachse liegt als die andere Schneide. In einer speziellen Ausführungsform sind die beiden Schneidkanten konkav bzw. konvex gekrümmt.

Die Auslegeschrift DE 1224006 beschreibt eine scherenartig wirkende Zerkleinerungsvorrichtung für Nahrungsmittel oder dergleichen, bestehend aus in Topfform angeordneten Gegenschneiden und einem darin umlaufenden, das zu zerkleinernde Gut den Gegenschneiden zuführenden und im Zusammenwirken damit zerkleinernden blattförmigem Messer, bei dem die nach Art von Sägezähnen ausgebildeten Zähne innen liegende, dem Messer entgegengerichtete Schneiden mit gegenüber der Schneide nach außen versetzten Kanten aufweisen, wobei die Schneiden mit den beiden Außenschneiden des im Wesentlichen rechteckigen Messers zusammenwirken, während die untere Längsschneide des Messers unmittelbar auf das Schneidgut wirkt. Dabei sind die Messerflügel derart verwunden, dass die untere Messerkante bei der Messerdrehung der oberen Messerkante voreilt, sodass das Schneidgut nach oben in den mit den Gegenschneiden versehenen Topf hineingefördert wird.

Schließlich offenbart die Auslegeschrift DE 1219640 eine scherenartig wirkende Zerkleinerungsvorrichtung für Nahrungsmittel oder dergleichen, bestehend aus in Topfform angeordneten Gegenschneiden und einem darin umlaufenden, das zu zerkleinernde Gut den Gegenschneiden zuführenden und im Zusammenwirken damit zerkleinernden blattförmigen Messer. Nach Art von Sägezähnen ausgebildete Zähne weisen innen liegende, dem Messer entgegengerichtete Schneiden mit gegenüber der Schneide nach außen versetzten Kanten auf, wobei die Schneiden mit den beiden Außenschneiden des im Wesentlichen rechteckigen Messers zusammenwirken, während die untere Längsschneide des Messers unmittelbar auf das Schneidgut wirkt. Die hinterschnittene Ausbildung des einzelnen feststehenden Zahnes hat den Vorteil, dass die Schneide des in der Umlaufrichtung des Messers folgenden Zahnes freiliegt, sodass die Vorrichtung besser und schneller arbeiten kann. Das rechteckige blattförmige Messer ist in seiner Mitte mit der Antriebswelle fest verbunden und liegt bei senkrechter Antriebswelle gleichfalls in senkrechter Ebene, wobei die Messerflügel gegenüber der Messerdrehrichtung zwecks Bildung keilförmiger Räume zwischen den Messerflügeln und der inneren Topfwandung zurückgebogen sein können. Die Gegenschneiden können parallel zu den umlaufenden Schneiden liegen, oder es kann sich um sich kreuzende Schneiden handeln.

Die Druckschrift US 3 109 471 A zeigt ein Kreisringschergerät zur Zerkleinerung von Lebensmitteln, beispielsweise tierischem Knorpel. Das Kreisringschergerät ist an einem Ende eines ihm die Lebensmittel zuführenden Trichters angeordnet und weist ein Schneidgerät auf, das sich in einem topfförmigen Siebteil drehend bewegt. Das topfförmige Siebteil weist an seinem Topfboden Durchtrittsöffnungen auf und an einem den Topfboden kragenförmig umschließenden inneren Topfmantel Schneidmesser, gegen die Lebensmittel mittels des Schneidmessers zum Zwecke der Zerkleinerung gepresst werden, wobei Klingen des Schneidgeräts derart ausgebildet sind, dass sie propellerähnliche Schaufeln bilden, die das zerkleinerte Lebensmittel durch die Durchtrittsöffnungen des Topfbodens des Siebteils befördern.

In der Druckschrift EP 2 545 819 A1 wird ein Küchengerät in Form eines Stabmixers offenbart, bei dem ein topfförmiges Siebteil, dessen Topfboden mit Durchtrittsöffnungen versehen ist, austauschbar ist. Dabei weisen die einzelnen austauschbaren Siebteile eine besondere Anordnung - Muster - von Durchtrittsöffnungen auf, die wiederum unterschiedliche Größen haben. Dadurch ist es möglich den Stabmixer auf eine gewünschte Zerkleinerungsgröße eines Bearbeitungsguts anzupassen.

Des Weiteren offenbart die Druckschrift CN 201 578 105 U einen herkömmlichen Stabmixer, der ein Schneidwerkzeug in Form eines rotierenden Propellers aufweist, das innerhalb eines halbkugelförmigen Topfs untergebracht ist. Am Rand des halbkugelförmigen Topfs sind Öffnungen vorgesehen, durch die das zerkleinerte Bearbeitungsgut austreten kann.

### Erfindungsgemäße Aufgabe

Die erfindungsgemäße Aufgabe besteht darin, eine verbesserte Komponente eines Küchengeräts zur Verfügung zu stellen. Zudem besteht die Aufgabe darin, ein verbessertes Küchengerät mit einer solchen Komponente bereitzustellen.

### Erfindungsgemäße Lösung

Die erfindungsgemäße Aufgabe wird durch eine Komponente eines Küchengeräts mit einer Kupplung zur Befestigung eines Werkzeugs sowie einem topfförmigen Siebteil mit einem mit Durchtrittsöffnungen versehenen Topfboden und einem den Topfboden kragenförmig umschließenden Topfmantel gelöst. Dabei weist das Siebteil auf einer Innenseite Schneidkanten auf, die im Wesentlichen radial zu einer Achse der Kupplung ausgerichtet sind. Vorzugsweise durchmessen mindestens 10% der Durchschnittsöffnungen mindestens 0,2 mm. Die Schneidkanten auf der Innenseite des Siebteils sind im Spritzgießverfahren gebildet. Die Schneidkanten sind gleichmäßig auf der Innenseite des Siebteils verteilt, sodass die Schneidkanten den Topfboden in Segmente gleicher Größe unterteilen. Alternativ ist es jedoch auch möglich, dass die Segmente unterschiedliche Größen aufweisen, z.B. weil die Schneidkanten unregelmäßig über den Topfboden verteilt sind. Durch eine geeignete Anordnung der Schneidkanten kann eine besonders effiziente Zerkleinerung des Bearbeitungsguts erreicht werden. Der Topfmantel weist Aussparungen auf. Die Aussparungen sind vorzugsweise langgestreckt. Dabei ist es bevorzugt, dass der längste Durchmesser der Aussparungen des Topfmantels parallel zur Achse der Kupplung ausgerichtet ist. Durch ein rotierendes Werkzeug kann eine radiale Kraft auf ein Bearbeitungsgut erzeugt werden. Durch diese Kraft kann vorteilhafterweise das Bearbeitungsgut durch Aussparungen im Topfmantel hindurchgedrückt werden, sodass es dabei zerkleinert wird. Dadurch ist eine besonders schnelle Bearbeitung von Nahrungsmitteln erreichbar. Die erfindungsgemäße Aufgabe wird zudem durch ein Küchengerät mit der besagten Komponente gelöst.

Der Durchmesser der Durchtrittsöffnungen bezieht sich dabei auf den größten Abstand zweier Punkte an der Begrenzung der jeweiligen Durchtrittsöffnung. Dass die Schneidkanten im Wesentlichen radial zu der Achse der Kupplung ausgerichtet sind, bedeutet, dass die Schneidkanten um bis zu 30 Grad von der radialen Richtung, bezogen auf die Achse, abweichen können.

Bei im Spritzgussverfahren hergestellten Komponenten von Küchengeräten entstehen häufig scharfkantige Zonen durch den Produktionsprozess. Im Stand der Technik entstehen solche Zonen häufig auf der Außenseite des topfförmigen Siebteils. Die erfindungsgemäße Komponente wird jedoch so produziert, dass scharfkantige Schneidkanten auf der Innenseite des Siebteils entstehen. So können die Schneidkanten besonders günstig produziert werden. Durch die Erfindung ist eine besonders effiziente Behandlung von Bearbeitungsgut erreichbar. Zum Beispiel können beim Pürieren grobe Stücke, die sich zwischen einem an die Komponente angebrachten Werkzeug und dem Topfboden verfangen, durch die Schneidkanten zerkleinert werden. Die Schneidkanten können Partikel des Bearbeitungsguts auffangen, sodass das Bearbeitungsgut abgebremst wird und eine nach außen gerichtete Kraft auf die Partikel erzeugt werden kann, sodass die Partikel durch die Durchtrittsöffnungen hinweg auf die Außenseite des Siebteils befördert werden und so eine schnellere Bearbeitung ermöglicht wird.

### Bevorzugte Ausführungsformen

Vorzugsweise weichen die Schneidkanten um weniger als 20 Grad, besonders vorzugsweise weniger als 10 Grad, und ganz besonders vorzugsweise um weniger als 5 Grad, bezogen auf eine radiale Richtung zur Achse ab. Besonders vorzugsweise sind die Schneidkanten radial zur Achse ausgerichtet und weichen somit um 0 Grad von der radialen Richtung ab. Vorzugsweise sind die Schneidkanten gerade, alternativ können die Schneidkanten jedoch auch gekrümmt sein. Vorzugsweise ist die Krümmung der Schneidkanten in Drehrichtung eines auf die Kupplung aufgesetzten Werkzeugs voreilend oder nacheilend.

Vorzugsweise weisen die Durchtrittsöffnungen einen Durchmesser von mindestens 0,3 mm, besonders vorzugsweise von 0,4 mm, besonders vorzugsweise von 0,5 mm, besonders vorzugsweise von 1 mm, besonders vorzugsweise von 1,5 mm, besonders vorzugsweise von 2 mm, besonders vorzugsweise von 3 mm, besonders vorzugsweise von 5 mm und ganz besonders vorzugsweise von 7 mm auf. Vorzugsweise treffen die genannten Durchmesser auf mindestens 20%, besonders vorzugsweise mindestens 30%, besonders vorzugsweise mindestens 50%, besonders vorzugsweise mindestens 70%, besonders vorzugsweise mindestens 90% und ganz besonders vorzugsweise auf alle Durchtrittsöffnungen im Siebteil zu. Durch eine ausreichende Anzahl ausreichend großer Durchtrittsöffnungen kann ein effektives Behandeln eines Bearbeitungsgutes durch die Komponente des Küchengeräts sichergestellt werden.

In einer bevorzugten Ausführungsform weist die Komponente mindestens drei Schneidkanten auf. Vorzugsweise weist die Komponente mindestens 5, besonders vorzugsweise mindestens 7, besonders vorzugsweise mindestens 10, besonders vorzugsweise mindestens 15, besonders vorzugsweise mindestens 20 und ganz besonders vorzugsweise mindestens 30 Schneidkanten auf. Dabei ist die Anzahl der Schneidkanten bevorzugt höchstens 100, besonders bevorzugt höchstens 70 und ganz besonders bevorzugt höchstens 50. Durch eine geeignete Anzahl von Schneidkanten kann ein Bearbeitungsgut besonders schnell zerkleinert werden.

In einer bevorzugten Ausführungsform weist der Topfboden weniger als 500 Durchtrittsöffnungen auf. Vorzugsweise weist der Topfboden weniger als 400, besonders vorzugsweise weniger als 300 und ganz besonders vorzugsweise weniger als 250 Durchtrittsöffnungen auf. Vorzugsweise weist der Topfboden mehr als 10, besonders vorzugsweise mehr als 20, besonders vorzugsweise mehr als 50, besonders vorzugsweise mehr als 100 und ganz besonders vorzugsweise mehr als 150 Durchtrittsöffnungen auf. Durch eine geeignete Anzahl von Durchtrittsöffnungen kann eine große Menge von Bearbeitungsgut pro Zeiteinheit austreten, sodass ein schnelles Verarbeiten durch die Komponente des Küchengeräts erreicht werden kann.

Vorzugsweise nehmen die Durchtrittsöffnungen eine langgestreckte Form an. Vorzugsweise trifft dies auf mindestens 10%, besonders vorzugsweise mindestens 20%, besonders vorzugsweise mindestens 50%, besonders vorzugsweise mindestens 70%, besonders vorzugsweise mindestens 90% und ganz besonders vorzugsweise alle Durchtrittsöffnungen im Siebteil zu. Dass die Durchtrittsöffnungen langgestreckt sind bedeutet, dass diese von einer Kreisform abweichen, z.B. oval sind. Besonders vorzugsweise nehmen die Durchtrittsöffnungen die Form eines klassischen Stadions an, d.h., dass ihre Form in einem Rechteck besteht, das an zwei gegenüberliegenden Seiten jeweils einen Halbkreis aufweist. Alternativ können die Durchtrittsöffnungen auch kreisrund, vieleckig und insbesondere rechteckig sein. Durch eine geeignete Form der Durchtrittsöffnungen ist es erreichbar, dass das Bearbeitungsgut möglichst schnell durch das Siebteil hindurchtreten kann und zugleich während des Durchtretens zerkleinert wird.

In einer bevorzugten Ausführungsform ist der Längsdurchmesser der Durchtrittsöffnungen in radialer Richtung zur Achse der Kupplung ausgerichtet. Vorzugsweise trifft dies auf mindestens 10%, besonders vorzugsweise mindestens 20%, besonders vorzugsweise mindestens 50%, besonders vorzugsweise mindestens 70% und ganz besonders vorzugsweise alle Durchtrittsöffnungen im Siebteil zu. Durch eine geeignete Ausrichtung der Durchtrittsöffnungen können eine hohe Anzahl von Durchtrittsöffnungen zwischen zwei Schneidkanten angeordnet werden.

In einer bevorzugten Ausführungsform ist der Topfboden des Siebteils nach außen gewölbt. Vorzugsweise weist das Siebteil eine konvexe Form auf, insbesondere ist der Topfboden des Siebteils vorzugsweise konvex geformt, wenn dieser von außen betrachtet wird. Auf der Innenseite des Siebteils, auf der sich vorzugsweise auch die Kupplung befindet, ist der Topfboden vorzugsweise konkav. Durch eine entsprechende Wölbung des Topfbodens kann Bearbeitungsgut von einem peripheren Bereich im Inneren des Siebteils hin zur Kupplung transportiert werden. Dabei ist es erreichbar, dass ein Werkzeug, dass an die Kupplung der Komponente angebracht ist, besonders gut mit dem Bearbeitungsgut interagieren kann.

In einer bevorzugten Ausführungsform weist die Kupplung ein Gewinde auf. Vorteilhafterweise kann durch ein Gewinde ein Werkzeug reversibel an der Kupplung befestigt werden. Vorzugsweise handelt es sich bei dem Gewinde um ein mehrgängiges Gewinde, besonders vorzugsweise um ein dreigängiges Gewinde. Bei einem mehrgängigen Gewinde kann vorteilhafterweise die Steigung des Gewindes besonders hoch gewählt werden, sodass ein Werkzeug mit nur einer geringen Drehung angebracht und wieder entfernt werden kann. Sofern die Achse frei drehbar ist, ist es durch eine hohe Gewindesteigung bei einem mehrgängigen Gewinde möglich, dass ein Benutzer das Werkzeug mit einer axialen Bewegung mit der Kupplung verbinden kann und durch eine entgegengesetzte Bewegung von der Kupplung ablösen kann. Durch die Bewegung des Werkzeugs axial zur Kupplung kann sich die Achse derart drehen, dass sich eine Schraubverbindung zwischen Werkzeug und Kupplung ergeben kann oder sich bei entgegengesetzter Bewegung eine Schraubverbindung zwischen Werkzeug und Kupplung lösen kann. Vorzugsweise handelt es sich bei dem Gewinde an der Kupplung um ein Außengewinde. In diesem Fall kann die Kupplung besonders einfach gereinigt werden. Vorzugsweise hat das Gewinde der Kupplung eine Steigung von mindestens 2 mm, besonders vorzugsweise mindestens 5 mm und ganz besonders vorzugsweise mindestens 10 mm. Durch eine besonders hohe Steigung des Gewindes der Kupplung kann das Werkzeug besonders einfach auf der Kupplung befestigt und von dieser entfernt werden. Vorzugsweise weist die Kupplung zumindest ein Rastmittel auf. Das Rastmittel ist vorzugsweise dazu geeignet, zur Verrastung mit dem Werkzeug zu dienen. Das Rastmittel umfasst vorzugsweise eine Vorwölbung, eine Aussparung und/oder eine Einkerbung. Das Rastmittel kann z.B. eine Rastnase, eine Rastnut und/oder einen umlaufenden Ring umfassen. Vorzugsweise kann das Rastmittel die Position des Werkzeugs auf der Kupplung sichern. Eine spürbare Verrastung des Werkzeugs mit dem Rastmittel der Kupplung kann einem Benutzer die korrekte Positionierung des Werkzeugs signalisieren.

Das Küchengerät ist bevorzugt ein Stabmixer. Die Komponente ist bevorzugt die Komponente eines Stabmixers. Alternativ kann das Küchengerät auch z.B. eine Küchenmaschine oder ein Rührgerät sein. Derartige Küchengeräte können durch Komponenten mit Schneidkanten ergänzt werden, sodass sich eine besonders vorteilhafte Behandlung von Bearbeitungsgut ergeben kann.

In einer bevorzugten Ausführungsform ist die Komponente eine Pürierkomponente. Die Komponente ist - bevorzugt mit aufgesetztem Werkzeug - dazu geeignet, ein Bearbeitungsgut, wie z.B. gekochtes Gemüse, zu pürieren. Dazu ist das Werkzeug vorzugsweise als Drehscheibe, Schraube und/oder Messer ausgeführt. Dabei dreht sich das Werkzeug vorzugsweise derart, dass Bearbeitungsgut über die Schneidkanten bewegt wird und von diesen zerkleinert wird. Zudem kann durch die Schneidkanten erreicht werden, dass Partikel des Bearbeitungsgutes aufgefangen werden, sodass sich das Bearbeitungsgut verlangsamt und eine nach außen gerichtete Kraft auf die Partikel erzeugt wird, sodass die Partikel durch die Durchtrittsöffnungen hinweg auf die Außenseite des Siebteils befördert werden können. Vorzugsweise ist die Komponente die Komponente eines Pürierstabs. Vorzugsweise ist die Komponente abnehmbar vom Küchengerät. Vorzugsweise kann die Komponente zerstörungsfrei vom Küchengerät abgelöst und wieder mit diesem verbunden werden. So kann ein Küchengerät mit mehreren unterschiedlichen Komponenten betrieben werden. In einer bevorzugten Ausführungsform ist die Komponente fest mit dem Küchengerät verbunden, sodass die Komponente nicht zerstörungsfrei von dem Küchengerät entfernt werden kann. Das Küchengerät kann so besonders stabil ausgestaltet sein.

In einer bevorzugten Ausführungsform ist das Verhältnis des Flächeninhalts von Öffnungen im Siebteil zu einer inneren Oberfläche des Siebteils mindestens 5%. Mindestens 5% der inneren Oberfläche des Siebteils sind mit Öffnungen versehen. Öffnungen sind in diesem Sinne sowohl Aussparungen im Topfmantel als auch Durchtrittsöffnungen im Topfboden. Besonders vorzugsweise ist das Verhältnis des Flächeninhalts der Öffnungen zur inneren Oberfläche des Siebteils mindestens 10%, besonders vorzugsweise mindestens 20%, besonders vorzugsweise mindestens 30% und vorzugsweise höchstens 60%, besonders vorzugsweise höchstens 50% und ganz besonders vorzugsweise höchstens 40%.

In einer bevorzugten Ausführungsform sind die Schneidkanten an der Innenseite des Siebteils gegen eine Rotationsrichtung der Kupplung ausgerichtet. Im Betrieb der Komponente rotiert vorzugsweise ein an die Kupplung angebrachtes Werkzeug in einer bestimmten Richtung. Die Schneidkanten sind vorzugsweise so angebracht, dass das von dem Werkzeug in Rotation gebrachte Bearbeitungsgut auf die Schneidkanten trifft und von diesen zerkleinert wird. Alternativ ist es möglich, dass die Schneidkanten in Richtung der Rotation der Kupplung ausgerichtet sind. Durch eine geeignete Ausrichtung der Schneidkanten kann eine besonders effektive Zerkleinerung des Bearbeitungsguts erreicht werden.

### Kurzbeschreibung der Figuren

- Figur 1: zeigt ein erfindungsgemäßes Küchengerät als Stabmixer;
- Figur 2: zeigt eine Komponente eines Küchengeräts als Pürierkomponente mit aufgesetztem Werkzeug;
- Figur 3: zeigt die Pürierkomponente ohne Werkzeug;
- Figur 4: zeigt das Werkzeug für die Pürierkomponente;
- Figur 5: zeigt die Pürierkomponente mit aufgesetztem Werkzeug in einem Längsschnitt;
- Figur 6: zeigt das Werkzeug und die Kupplung; und
- Figur 7: zeigt ein Schnitt durch die Kupplung bei aufgesetztem Werkzeug.

### Ausführliche Beschreibung anhand von Ausführungsbeispielen

Bei der nachfolgenden Beschreibung von bevorzugten Ausführungsbeispielen der vorliegenden Erfindung bezeichnen gleiche Bezugszeichen gleiche oder vergleichbare Komponenten. Der Übersichtlichkeit halber sind nicht in allen Figuren alle Bezugszeichen dargestellt.

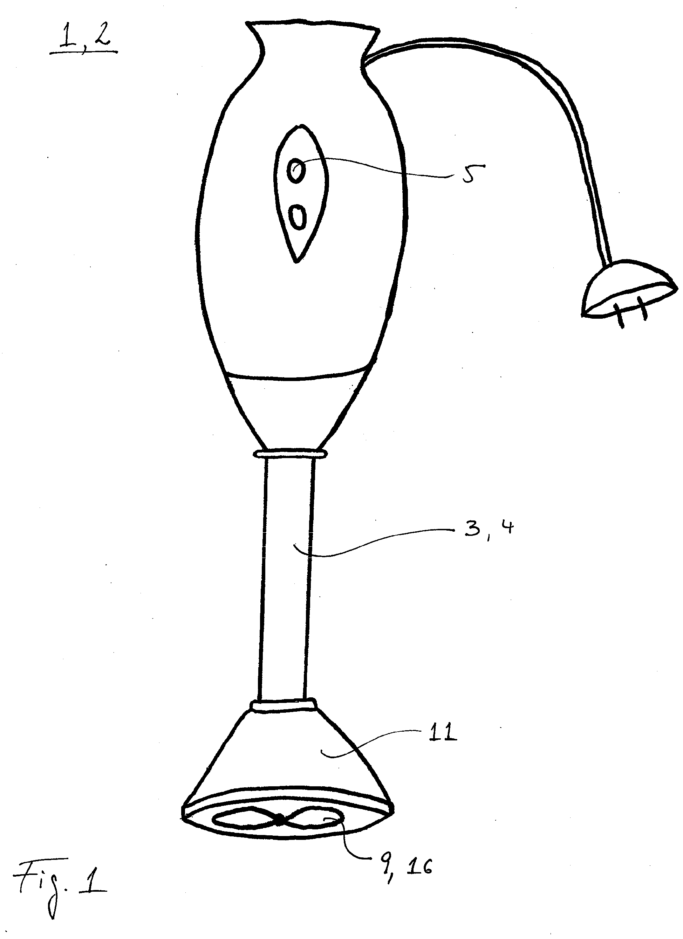

Die Figuren 1 zeigt das erfindungsgemäße Küchengerät 1 ausgeführt als Stabmixer 2. An dem Küchengerät 1 ist als Komponente 3 eine Pürierkomponente 4 aufgesetzt. Ferner weist das Küchengerät 1 einen Schalter 5 auf, mit dem ein elektrischer Motor 6 (nicht dargestellt) im Stabmixer 2 an- und ausgeschaltet werden kann. Die in Figuren 1 bis 3 und 5 dargestellte Komponente 3 weist eine Achse 7 mit einer Kupplung 8 auf, die zur Befestigung eines Werkzeugs 9 dient. Dabei weist die Kupplung 8 ein mehrgängiges Gewinde 10 auf.

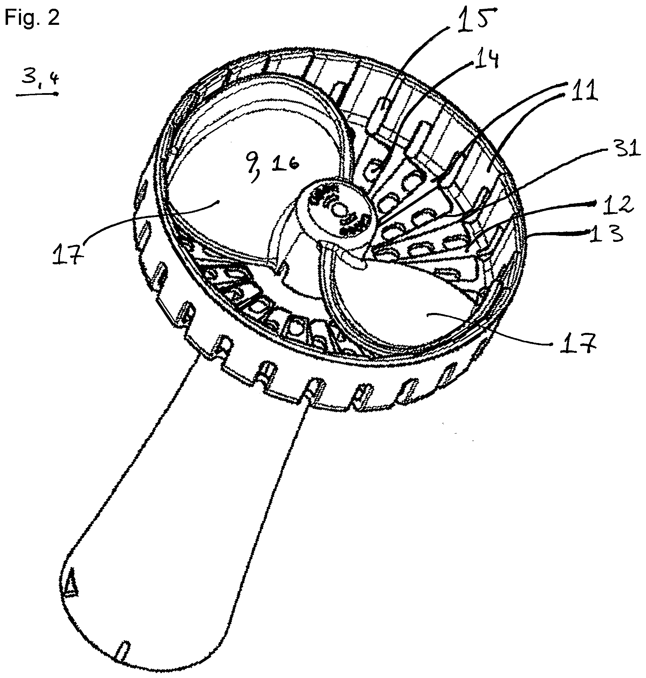

Figur 2 zeigt die erfindungsgemäße Komponente 3 mit aufgesetztem Werkzeug 9. Dabei ist zu sehen, dass die Komponente 3 ein das Werkzeug 9 teilweise umgebendes Siebteil 11 aufweist. Das Siebteil 11 ist topfförmig ausgebildet und weist einen Topfboden 12 sowie einen Topfmantel 13 auf, der den Topfboden 12 kragenartig umschließt. Der Topfboden 12 weist Durchtrittsöffnungen 14 auf. Zudem befinden sich in dem Topfmantel 13 Aussparungen 15. Das Werkzeug 9 ist auf einer in Figur 2 nicht dargestellten Kupplung 8 der Pürierkomponente 4 aufgesteckt. Das Werkzeug 9 ist in diesem Ausführungsbeispiel als Pürierwerkzeug 16 ausgebildet. Das Pürierwerkzeug 16 nimmt im Wesentlichen die Form eines Propellers mit zwei Flügeln 17 ein. In dieser Ausführungsform und in der in Figur 2 gezeigten Ansicht von unten rotiert das Werkzeug 9 der Komponente 3 im Uhrzeigersinn. Dabei wird Bearbeitungsgut von dem Werkzeug 9 an den Topfboden 12 und den Topfmantel 13 gepresst, sodass das Bearbeitungsgut zerkleinert wird und durch die Aussparungen 15 im Topfmantel 13 sowie durch die Durchtrittsöffnungen 14 im Topfboden austritt.

In Figur 2 sind zudem die Schneidkanten 31 an der inneren Oberfläche des Topfbodens 12 der Komponente 3 zu sehen. In dieser Ausführungsform sind die Schneidkanten 31 entgegen der Drehrichtung des Werkzeugs 9 ausgerichtet. Im Betrieb der Pürierkomponente 4 kann das Pürierwerkzeug 16 Bearbeitungsgut in Rotation versetzen. Das rotierende Bearbeitungsgut zwischen Pürierwerkzeug 16 und Topfboden 12 kann dabei über die Schneidkanten 31 bewegt werden, sodass diese das Bearbeitungsgut zerkleinern. Auf diese Weise kann sich eine besonders schnelle und effektive Zerkleinerung von Bearbeitungsgut ergeben.

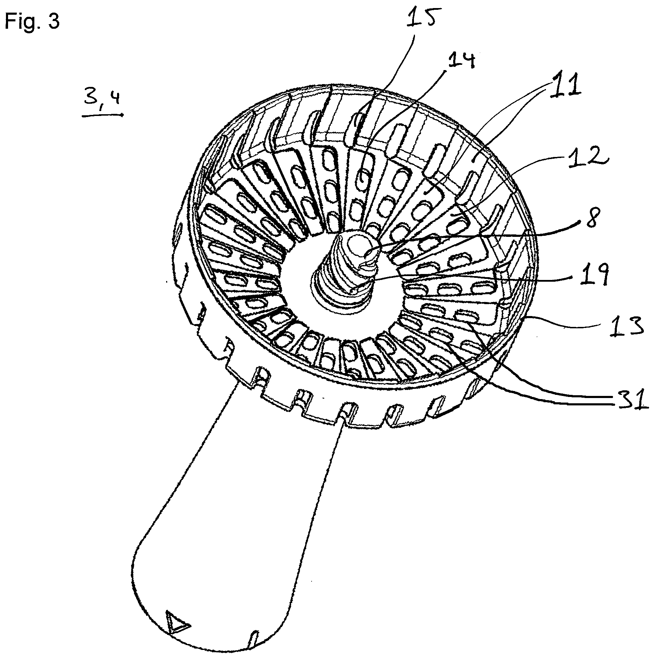

Figur 3 zeigt die Pürierkomponente ohne das Werkzeug. In dieser Ansicht ist die Kupplung 8 mit ihrem mehrgängigen Gewinde 10 besonders deutlich zu erkennen. Die elongierten, ovalen Durchtrittsöffnungen 14 im Topfboden 12 sind hier radial zur Kupplung 8 ausgerichtet. Die Aussparungen 15 im Topfmantel 13 sind ebenfalls elongiert und parallel zu der hier nicht dargestellten Achse 7 der Pürierkomponente 4 ausgerichtet. Die Schneidkanten 31 sind auch in Figur 3 zu erkennen. Zu sehen ist dabei auch, dass die Schneidkanten 31 sich nicht bis zum Rand der Kupplung 8 fortsetzen, sondern von dieser etwa 0,5 bis 1 cm beabstandet sind. Erkennbar ist zudem, dass die Schneidkanten 31 den Topfboden 12 in schmale Segmente unterteilen, wobei diese Segmente zueinander verdreht sind, sodass sich ein fächerförmiges Erscheinungsbild ergibt. Durch die angewinkelten Segmente kann ein rotierendes Bearbeitungsgut besonders effektiv zerkleinert werden.

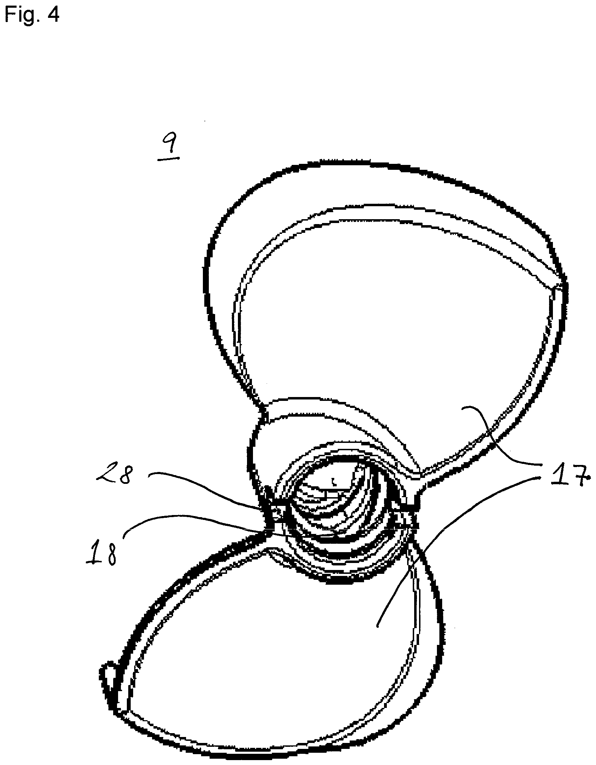

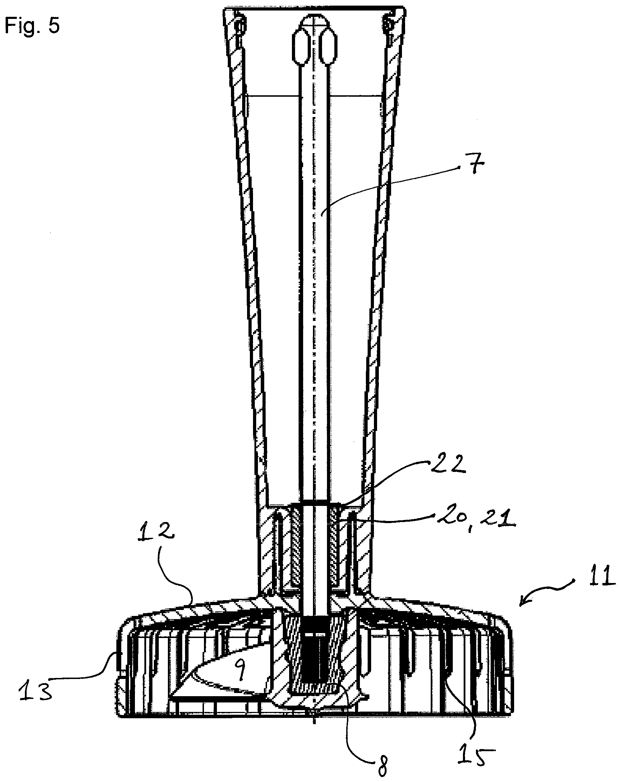

Figur 4 zeigt das propellerartige Pürierwerkzeug 16 mit einem Innengewinde 18, das auf das Außengewinde der in Figur 3 dargestellten Kupplung 8 aufgesteckt werden kann. Figur 5 zeigt den Längsschnitt durch die Achse 7 der Pürierkomponente 4 mit aufgesetztem Pürierwerkzeug 16. Dabei sind die parallel zur Achse 7 ausgerichteten Aussparungen 15 im Topfmantel 13 deutlich zu erkennen. Zudem ist in Figur 5 ein Drehlager 20 zum Lagern der Achse 7 in der Komponente 3 gezeigt. Dabei ist das Drehlager 20 als Gleitlager 21 ausgeführt ist. Auf der Achse 7 ist oberhalb des Gleitlagers 21 eine Dichtungsscheibe 22 angebracht, die ein Verrutschen der Achse 7 verhindert.

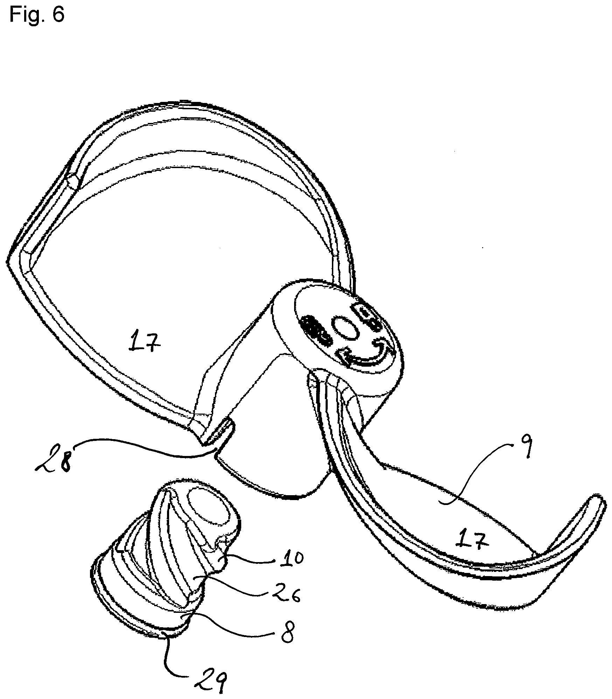

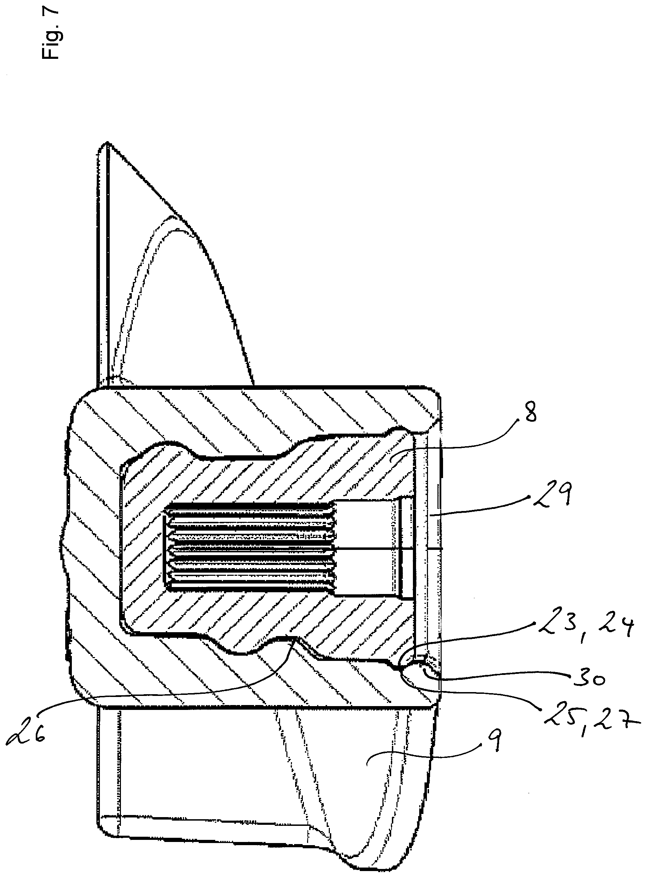

Figuren 6 und 7 zeigen die Kupplung 8 mit ihrem mehrgängigen Außengewinde 19 und einem Rastmittel 23, das als ein ringförmiger Rastvorsprung 24 ausgebildet ist, der mit einem Rastmittel 25 des Werkzeug 9 verrasten kann. Figur 7 zeigt einen Schnitt durch das Werkzeug 9, das mit der Kupplung 8 verrastet ist. Dabei ist das mehrgängige Gewinde 10 der Kupplung 8 mit seinen Gewindegängen 26 deutlich zu erkennen. Zudem ist gezeigt, dass der ringförmige Rastvorsprung 24 der Kupplung 8 mit dem Rastmittel 25 des Werkzeugs 9 verrastet ist. Das Rastmittel 25 des Werkzeugs 9 ist in dieser Ausführungsform als eine Rastnut 27 des Werkzeugs 9 ausgeführt. Das Verrasten des Werkzeugs 9 mit der Kupplung 8 ist durch Einschnitte 28 des Werkzeugs 9 erleichtert. Die Einschnitte 28 sind in dieser Ausführungsform eines Werkzeugs 9 für einen Stabmixer 2 ausgehend von der Oberfläche des Werkzeugs 9 gefertigt, die beim Betrieb des Stabmixers 2 dem Motor 6 des Stabmixers 2 am nächsten liegt. Durch die Einschnitte 28 wird eine Flexibilität im Bereich der Einschrauböffnung des Werkzeugs 9 geschaffen, sodass das Rastmittel 23 der Kupplung 8 besonders leicht mit dem Rastmittel 25 des Werkzeugs 9 verrasten kann. Das Rastmittel 25 des Werkzeugs 9 ist hier zudem derart gestaltet, dass die Orientierung des Werkzeugs 9 gegenüber der Kupplung 8 eindeutig festgelegt ist. Dazu können an der Kupplung 8 Vorsprünge vorgesehen sein, die mit den Einschnitten 28 des Werkzeugs 9 kooperieren können. Die Kupplung 8 weist darüber hinaus einen Ring 29 auf, der den Überhang 30 des Werkzeugs 9 stützen kann, wenn das Werkzeug 9 auf die Kupplung aufgesetzt ist. Der Überhang 30 ist dabei der Teil des Werkzeugs 9, der sich im aufgesetzten Zustand des Werkzeugs 9 auf die Kupplung 8 zwischen Ring 29 der Kupplung 8 und Rastvorsprung 24 der Kupplung 8 befindet.

Das Werkzeug 9 kann durch Drehen auf die Kupplung 8 aufgeschraubt werden. Wenn die Komponente 3 nicht mit dem Küchengerät 1 verbunden ist und die Achse 7 frei drehbar ist, so kann das Werkzeug 9 auch durch ein einfaches axiales Drücken auf die Kupplung 8 aufgeschoben werden. Da das mehrgängige Gewinde 10 der Kupplung 8 in der Ausführungsform in Figur 6 besonders steil ist, kann sich durch das Aufschieben des Werkzeugs 9 auf die Kupplung 8 die Achse 7 derart drehen, dass das Werkzeug 9 auf die Kupplung 8 aufgeschraubt wird. Zur Befestigung der Kupplung 8 an dem Werkzeug 9 befindet sich ein Rastvorsprung 24 an der Kupplung 8 und eine Rastnut 27 am Werkzeug 9, die durch das Aufschieben miteinander verrasten. Wenn die Komponente 3 mit dem Küchengerät 1 verbunden ist, so kann das Werkzeug 9 durch Rotation von der Kupplung 8 abgeschraubt werden. Falls die Achse 7 frei drehbar ist, so kann das Werkzeug 9 auch einfach von der Kupplung 8 abgezogen werden, wobei sich die Kupplung 8 während des Abziehens derart dreht, dass das Werkzeug 9 von der Kupplung 8 abgeschraubt wird. Falls sich bei der Verwendung des Küchengeräts 1 Bearbeitungsgut zwischen Werkzeug 9 und Kupplung 8 verfängt, so kann sich das Werkzeug 9 durch die hohe Steigung des mehrgängigen Gewindes 10 der Kupplung 8 von der Kupplung 8 abschrauben, so dass eine Beschädigung des Küchengeräts 1 vermieden wird. Zudem ist durch das mehrgängige Gewinde 10 das Drehmoment, bei dem ein Materialbruch entsteht wesentlich höher als bei aus dem Stand der Technik bekannten Lösungen. Die Endposition des Werkzeugs 9 auf der Kupplung 8 ist für den Benutzer durch das Verrasten der Rastmittel 23, 25 der Kupplung 8 und des Werkzeugs 9 spürbar.

### Bezugszeichenliste

1 Küchengerät
2 Stabmixer
3 Komponente eines Küchengeräts
4 Pürierkomponente
5 Schalter
6 Motor
7 Achse
8 Kupplung
9 Werkzeug
10 Gewinde
11 Siebteil
12 Topfboden
13 Topfmantel
14 Durchtrittsöffnungen im Topfboden
15 Aussparungen im Topfmantel
16 Pürierwerkzeug
17 Flügel
18 Innengewinde
19 Außengewinde
20 Drehlager
21 Gleitlager
22 Dichtungsscheibe
23 Rastmittel der Kupplung
24 Rastvorsprung der Kupplung
25 Rastmittel des Werkzeugs
26 Gewindegang
27 Rastnut des Werkzeugs
28 Einschnitt des Werkzeugs
29 Ring der Kupplung
30 Überhang des Werkzeugs
31 Schneidkante

## Patentansprüche

1. Komponente (3) eines Küchengeräts (1) mit einer Kupplung (8) zur Befestigung eines Werkzeugs (9) sowie einem topfförmigen Siebteil (11) mit einem mit Durchtrittsöffnungen (14) versehenen Topfboden (12) und einem den Topfboden (12) kragenförmig umschließenden Topfmantel (13), wobei das Siebteil (11) auf einer Innenseite scharfkantige Schneidkanten (31) aufweist, die im Wesentlichen radial zu einer Achse (7) der Kupplung (8) ausgerichtet sind, wobei die Schneidkanten (31) ungleichmäßig oder gleichmäßig auf der Innenseite des Siebteils (11) verteilt sind, sodass die Schneidkanten (31) den Topfboden (12) in zueinander verdrehte Segmente fächerförmig unterteilen, wobei die Schneidkanten (31) eingerichtet sind, Bearbeitungsgut aufzufangen, zu zerkleinern und auf eine Außenseite des Siebteils (11) durch die Durchtrittsöffnungen (14) im Topfboden (12) und Aussparungen (15) im Topfmantel (13) zu befördern, **dadurch gekennzeichnet, dass** die scharfkantigen Schneidkanten auf der Innenseite des Siebteils im Spritzgießverfahren gebildet sind.

2. Komponente (3) nach Anspruch 1, **dadurch gekennzeichnet, dass** sich mindestens drei Schneidkanten (31) auf der Innenseite des Siebteils (11) befinden.

3. Komponente (3) nach einem der vorherigen Ansprüche, **dadurch gekennzeichnet, dass** eine Ausrichtung der Schneidkanten (31) von einer zur Achse (7) der Kupplung (8) radialen Richtung um bis zu 30 Grad abweicht.

4. Komponente (3) nach einem der vorherigen Ansprüche, **dadurch gekennzeichnet, dass** die Schneidkanten (31) gerade oder gekrümmt ausgebildet sind.

5. Komponente (3) nach einem der vorherigen Ansprüche, **dadurch gekennzeichnet, dass** die Durchtrittsöffnungen (14) langgestreckt sind.

6. Komponente (3) nach einem der vorherigen Ansprüche, **dadurch gekennzeichnet, dass** der längste Durchmesser der Durchtrittsöffnungen (14) in radialer Richtung zur Achse (7) der Kupplung (8) ausgerichtet ist.

7. Komponente (3) nach einem der vorherigen Ansprüche, **dadurch gekennzeichnet, dass** der Topfboden (12) des Siebteils (11) nach außen gewölbt ist.

8. Komponente (3) nach einem der vorherigen Ansprüche, **dadurch gekennzeichnet, dass** die Kupplung (8) ein Gewinde (10) aufweist.

9. Komponente (3) nach einem der vorherigen Ansprüche, **dadurch gekennzeichnet, dass** die Kupplung (8) zumindest ein Rastmittel (23) aufweist.

10. Komponente (3) nach einem der vorherigen Ansprüche, **dadurch gekennzeichnet, dass** das Verhältnis des Flächeninhalts von Öffnungen zu einer inneren Oberfläche des Siebteils (11) mindestens 5% beträgt.

11. Komponente (3) nach einem der vorherigen Ansprüche, **dadurch gekennzeichnet, dass** die Schneidkanten (31) gegen eine Rotationsrichtung der Kupplung (8) ausgerichtet sind.

12. Küchengerät (1) mit einer Komponente (3) nach einem der Ansprüche 1 bis 11.

13. Küchengerät (1) nach Anspruch 12, **dadurch gekennzeichnet, dass** das Küchengerät (1) ein Stabmixer (2) ist.

14. Küchengerät (1) nach Anspruch 12 oder 13, **dadurch gekennzeichnet, dass** die Komponente (3) zum Pürieren eingerichtet ist.

## Claims

1. Component (3) of a kitchen appliance (1) with a coupling (8) for fastening a tool (9) and a pot-shaped sieve part (11) with a pot base (12) provided with through openings (14) and a pot casing (13) surrounding the pot base (12) in the manner of a flange, wherein the sieve part (11) has sharp cutting edges (31) on an interior, which are aligned essentially radially to an axis (7) of the coupling (8), wherein the cutting edges (31) are distributed non-uniformly or uniformly on the interior of the sieve part (11), so that the cutting edges (31) divide the pot base (12) in a fan-shaped manner into segments which are twisted with respect to one another, wherein the cutting edges (31) are configured to catch and break up the item to be processed and to convey it through the through openings (14) in the pot base (12) and cut-outs (15) in the pot casing (13) onto an exterior of the sieve part (11), **characterised in that** the sharp cutting edges on the interior of the sieve part are formed in the injection moulding method.

2. Component (3) according to claim 1, **characterised in that** at least three cutting edges (31) are disposed on the interior of the sieve part (11).

3. Component (3) according to one of the preceding claims, **characterised in that** an alignment of the cutting edges (31) deviates from a direction radial to the axis (7) of the coupling (8) by up to 30 degrees.

4. Component (3) according to one of the preceding claims, **characterised in that** the cutting edges (31) are embodied to be straight or curved.

5. Component (3) according to one of the preceding claims, **characterised in that** the through openings (14) are elongated.

6. Component (3) according to one of the preceding claims, **characterised in that** the longest diameter of the through openings (14) in the radial direction is aligned with respect to the axis (7) of the coupling (8).

7. Component (3) according to one of the preceding claims, **characterised in that** the pot base (12) of the sieve part (11) is curved outward.

8. Component (3) according to one of the preceding claims, **characterised in that** the coupling (8) has a thread (10).

9. Component (3) according to one of the preceding claims, **characterised in that** the coupling (8) has at least one latching means (23).

10. Component (3) according to one of the preceding claims, **characterised in that** the ratio of the surface area of openings to an inner surface of the sieve part (11) amounts to at least 5%.

11. Component (3) according to one of the preceding claims, **characterised in that** the cutting edges (31) are aligned against a direction of rotation of the coupling (8).

12. Kitchen appliance (1) with a component (3) according to one of claims 1 to 11.

13. Kitchen appliance (1) according to claim 12, **characterised in that** the kitchen appliance (1) is a mixing wand (2).

14. Kitchen appliance (1) according to claim 12 or 13, **characterised in that** the component (3) is designed for pureeing purposes.

## Revendications

1. Composant (3) d'un appareil de cuisine (1) comprenant un dispositif d'accouplement (8) pour la fixation d'un outil (9) ainsi qu'une partie de filtrage (11) en forme de pot, munie d'un fond de pot (12) doté d'ouvertures de passage (14) et munie d'une enveloppe de pot (13) entourant le fond de pot (12) en forme de col, la partie de filtrage (11) présentant sur un côté intérieur des arêtes de coupe (31) à angles vifs qui sont essentiellement orientées radialement par rapport à un axe (7) du dispositif d'accouplement (8), les arêtes de coupe (31) étant réparties de manière irrégulière ou régulière sur le côté intérieur de la partie de filtrage (11), de sorte que les arêtes de coupe (31) divisent le fond de pot (12) en segments tournés les uns vers les autres en forme d'éventail, les arêtes de coupe (31) étant configurées pour recueillir des produits à traiter, les broyer et les transporter sur un côté extérieur de la partie dé filtrage (11) à travers les ouvertures de passage (14) dans le fond de pot (12) et les évidements (15) dans l'enveloppe de pot (13), **caractérisé en ce que** les arêtes de coupe à angles vifs sont formées sur le côté intérieur de la partie de filtrage par procédé de moulage par injection.

2. Composant (3) selon la revendication 1, **caractérisé en ce qu'**au moins trois arêtes de coupe (31) se trouvent sur le côté intérieur de la partie de filtrage (11).

3. Composant (3) selon l'une quelconque des revendications précédentes, **caractérisé en ce qu'**une orientation des arêtes de coupe (31) diffère de jusqu'à 30 degrés d'une direction radiale par rapport à l'axe (7) du dispositif d'accouplement (8).

4. Composant (3) selon l'une quelconque des revendications précédentes, **caractérisé en ce que** les arêtes de coupe (31) sont réalisées de manière rectiligne ou courbée.

5. Composant (3) selon l'une quelconque des revendications précédentes, **caractérisé en ce que** les ouvertures de passage (14) sont allongées.

6. Composant (3) selon l'une quelconque des revendications précédentes, **caractérisé en ce que** le diamètre le plus long des ouvertures de passage (14) est orienté en direction radiale par rapport à l'axe (7) du dispositif d'accouplement (8).

7. Composant (3) selon l'une quelconque des revendications précédentes, **caractérisé en ce que** le fond de pot (12) de la partie de filtrage (11) est bombé vers l'extérieur.

8. Composant (3) selon l'une quelconque des revendications précédentes, **caractérisé en ce que** le dispositif d'accouplement (8) présente un filetage (10).

9. Composant (3) selon l'une quelconque des revendications précédentes, **caractérisé en ce que** le dispositif d'accouplement (8) présente au moins un moyen d'encliquetage (23).

10. Composant (3) selon l'une quelconque des revendications précédentes, **caractérisé en ce que** le rapport de l'aire de surface des ouvertures et d'une surface intérieure de la partie de filtrage (11) est d'au moins 5%.

11. Composant (3) selon l'une quelconque des revendications précédentes, **caractérisé en ce que** les arêtes de coupe (31) sont orientées à l'inverse d'une direction de rotation du dispositif d'accouplement (8).

12. Appareil de cuisine (1) comprenant un composant (3) selon l'une quelconque des revendications 1 à 11.

13. Appareil de cuisine (1) selon la revendication 12, **caractérisé en ce que** l'appareil de cuisine (1) est un mixeur plongeant (2).

14. Appareil de cuisine (1) selon la revendication 12 ou 13, **caractérisé en ce que** le composant (3) est configuré pour réduire en purée.
